(19) Europäisches Patentamt
European Patent Office
Office européen des brevets

(11) **EP 1 153 987 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
**C09D 5/00** *(2006.01)*  **C09D 7/12** *(2006.01)*
**C08K 9/06** *(2006.01)*

(21) Anmeldenummer: **01110983.2**

(22) Anmeldetag: **07.05.2001**

(54) **Zusammensetzungen für die Herstellung schwer benetzbarer Oberflächen**

Compositions for making barely wettable surfaces

Compositions pour préparer des surfaces difficilement mouillables

(84) Benannte Vertragsstaaten:
**AT BE CH CY DE DK ES FI FR GB GR IE IT LI LU MC NL PT SE TR**

(30) Priorität: **08.05.2000 DE 10022246**

(43) Veröffentlichungstag der Anmeldung:
**14.11.2001 Patentblatt 2001/46**

(73) Patentinhaber: **BASF Aktiengesellschaft**
**67056 Ludwigshafen (DE)**

(72) Erfinder:
 • **Keller, Harald**
  **67069 Ludwigshafen (DE)**
 • **Kühn, Ingolf**
  **99891 Schmerbach (DE)**
 • **Jahns, Ekkehard**
  **69469 Weinheim (DE)**

 • **Lach, Christian**
  **67098 Bad Dürkheim (DE)**
 • **Hüffer, Stephan**
  **67063 Ludwigshafen (DE)**
 • **Krebs, Thilo**
  **68167 Mannheim (DE)**
 • **Thomann, Yi**
  **79224 Umkirch (DE)**
 • **Frechen, Thomas**
  **69123 Heidelberg (DE)**

(74) Vertreter: **Kinzebach, Werner et al**
**Patentanwälte,**
**Reitstötter, Kinzebach & Partner,**
**Ludwigsplatz 4**
**67059 Ludwigshafen (DE)**

(56) Entgegenhaltungen:
**EP-A- 0 754 738        EP-A- 1 043 380**
**WO-A-96/04123        US-A- 5 296 282**

**Beschreibung**

Die vorliegende Erfindung betrifft eine Zusammensetzung, insbesondere ein Beschichtungsmittel zur Herstellung schwer benetzbarer Oberflächen sowie ein Verfahren zur Herstellung derartiger Oberflächen. Die vorliegende Erfindung betrifft insbesondere die Verwendung der erfindungsgemäßen Beschichtungsmittel zur Herstellung einer Oberfläche mit Selbstreinigungseffekt.

Übliche Oberflächen werden in der Regel von Flüssigkeiten benetzt. Der Grad der Benetzung ist ein Wechselspiel zwischen den Kohäsionskräften in der Flüssigkeit und den Adhäsionskräften zwischen Flüssigkeit und Oberfläche.

In vielen Fällen ist eine Benetzung einer Oberfläche durch eine Flüssigkeit unerwünscht. Beispielsweise führt die Benetzung von Oberflächen mit Wasser dazu, dass auf der Oberfläche Wassertropfen zurückbleiben und verdunsten, wobei die in Wasser gelösten oder suspendierten Feststoffe als hässliche Rückstände auf der Oberfläche zurückbleiben. Dieses Problem besteht insbesondere bei Oberflächen, die Regenwasser ausgesetzt sind.

Durch die Benetzung einer Oberfläche mit Wasser wird häufig auch ihre Korrosion oder ein Befall mit Mikroorganismen sowie der Bewuchs mit Algen, Flechten, Moosen, Muscheln, etc. ausgelöst.

Bei Verpackungen und Vorratsbehältern für flüssige Füllgüter ist eine geringe Benetzbarkeit der Innenflächen erwünscht, damit beim Entleeren nur geringe Flüssigkeitsmengen in der Verpackung bzw. im Vorratsbehälter zurückbleiben.

Auch im Apparate- und Anlagenbau ist eine geringe Benetzbarkeit von Anlagenteilen, die mit Flüssigkeiten in Kontakt kommen, erwünscht. Bei einer hohen Benetzbarkeit der Anlagenteile besteht nämlich die Gefahr einer verstärkten Bildung von Belägen und Ablagerungen. Außerdem hat eine erhöhte Benetzbarkeit in der Regel erhöhte Fließwiderstände von Flüssigkeiten in Rohrleitungen zur Folge.

Es ist bekannt, die Benetzbarkeit einer Oberfläche für hydrophile Flüssigkeiten durch eine hydrophobe Beschichtung der Oberfläche zu verringern. Als Beschichtungsmaterialien kommen dabei Polysiloxane und perfluorierte Polymere, insbesondere das extrem hydrophobe Polytetrafluorethylen (Teflon) in Betracht. Durch die Beschichtung werden die Adhäsionskräfte zwischen Flüssigkeit und benetzter Oberfläche verringert.

Außerdem hat es sich als günstig erwiesen, hydrophobe Oberflächen zu strukturieren. Derartige Oberflächenstrukturen weisen in der Regel regelmäßige oder unregelmäßige Erhebungen oder Vertiefungen im Bereich von 0,1 bis 1000 $\mu$m auf. Durch die Strukturierung wird zum einen die Adhäsion der Oberfläche für polare Flüssigkeiten wie Wasser noch weiter verringert. Außerdem führt die Strukturierung zu einer verringerten Adhäsion von festen Ablagerungen wie Schmutzpartikeln auf der Oberfläche. Zudem hat sich gezeigt, dass bei geeigneter Strukturierung die Schmutzpartikel durch bewegtes Wasser von der Oberfläche abgespült werden. Dieser Effekt wird auch als Selbstreinigungseffekt oder Lotus-Effekt bezeichnet (siehe Barthlott et al., Biologie in unserer Zeit, 28, Nr. 5, 314-322).

So beschreibt beispielsweise die WO 96/04123 selbstreinigende Oberflächen von Gegenständen, die eine künstliche Oberflächenstruktur besitzen, welche Erhebungen und Vertiefungen aufweist, wobei die Struktur insbesondere durch den Abstand zwischen den Erhebungen und die Höhe der Erhebungen charakterisiert ist. Die Herstellung der Oberflächen erfolgt beispielsweise durch Aufbringen von Teflonpulver auf eine mit Klebstoff behandelte Fläche oder durch Aufprägen einer Struktur auf ein thermoplastisch verformbares hydrophobes Material. Aus der US 3,354,022 sind ähnliche Oberflächen bekannt. Auch hier erfolgt die Herstellung der Oberfläche entweder durch Aufprägen einer Struktur oder durch Aufbringen von hydrophoben Partikeln, beispielsweise Wachspartikeln, auf eine hydrophobe Oberfläche. Außerdem wird eine Oberfläche beschrieben, die Glasstaub in einer Wachsmatrix enthält.

Aus der EP 933 388 ist ein Verfahren zur Herstellung strukturierter Oberflächen mit hydrophoben Eigenschaften bekannt, bei dem man zunächst eine Negativform durch Photolithographie herstellt, mit dieser Form eine Kunststofffolie prägt und anschließend die Kunststofffolie mit Fluoralkylsilanen hydrophobiert.

Die EP-A 909 747 beschreibt ein Verfahren zur Erzeugung einer Selbstreinigungseigenschaft auf Keramikkörpern wie Dachziegeln, bei dem man eine Dispersion von Tonpartikeln in einer organischen silikonharzlösung auf den Keramikkörper aufbringt und die Beschichtung aushärtet.

Aus der JP 7328532-A ist ein Beschichtungsverfahren bekannt, bei dem man feinteilige Teilchen mit einer hydrophoben Oberfläche auf einen feuchten Lack aufbringt und diesen aushärtet. Hierbei werden wasserabstoßende oberflächen erhalten.

Die EP-A-0 754 738 beschreibt Zusammensetzungen zur Herstellung schwer benetzbarer Oberflächendie ein Fluorkohtenstoffpolymerpulver, ein Bindemittel und ein Additiv enthalten. Als Bindemittel werden Homopolymere von Fluorolefinen, Polyvinylidenfluorid und Polytetrafluorethylen, sowie Aexylailikonharz Polyesterha2, Ethylen/Kohlenstoffmonoxid-Copolymer, Ethylen/Vinylketon-Copolymer, Propylen/Vinylketon-Copolymer und Styrol/Vinylketon-Copolymer genannt

Die im Stand der Technik beschriebenen Methoden zur Erzeugung schwer benetzbarer Oberflächen sind entweder sehr aufwendig oder führen nicht zu zufriedenstellenden Ergebnissen. Die Erzeugung einer strukturierten Oberfläche durch Prägeverfahren ist aufwendig und kann nur bei planen Oberflächen wirtschaftlich eingesetzt werden. Oberflächen, bei denen eine Strukturierung durch nachträgliches Aufbringen hydrophober Partikel erreicht wird, lassen sich häufig schlecht reproduzieren oder weisen nur eine geringe mechanische Stabilität auf. Zudem ist auch dieses Verfahren sehr aufwendig. Außerdem werden häufig fluororganische Verbindungen oder fluorhaltige Polymere benötigt, die nicht nur sehr teuer, sondern auch ökologisch bedenklich sind.

Der vorliegenden Erfindung liegt somit die Aufgabe zugrunde, ein Beschichtungsmittel zur Herstellung von Oberflächen mit geringer Benetzbarkeit bereitzustellen, mit dem in einfacher und reproduzierbarer Weise stabile Beschichtungen mit geringer Benetzbarkeit hergestellt werden können. Diese Aufgabe wird gelöst in Form eines Beschichtungsmittels, das wenigstens ein poröses Pulver mit einer hohen spezifischen Oberfläche, die außerdem hydrophob ist, und wenigstens ein hydrophobes Bindemittel für die Pulverteilchen umfasst, wobei das Gewichtsverhältnis von hydrophobem Pulver zu Bindemittel wenigstens 1:1,5 beträgt.

Demnach betrifft die vorliegende Erfindung eine zusammensetzung, insbesondere in Form eines Beschichtungsmittels, zur Herstellung schwer benetzbarer Oberflächen, enthaltend

    i) wenigstens ein feinteiliges Pulver, dessen Pulverteilchen eine hydrophobe Oberfläche und eine poröse Struktur aufweisen, die durch eine BET-Oberfläche (bestimmt nach DIN 66131) von wenigstens 1 m$^2$/g charakterisiert ist, und

    ii) wenigstens ein filmbildendes Bindemittel, das durch eine Oberflächenspannung < 50 mN/m charakterisiert ist, und das ausgewählt ist unter Polymethylen, Polypropylen, Polyisobuten, Homo- und Copolymeren ethylenisch ungesättigter Monomere mit $C_4$-$C_{36}$-Alkyigruppen, und $C_3$-$C_4$-Polyalkylenoxiden,

wobei das Gewichtsverhältnis von Pulver zu Bindemittel wenigstens 1:1,5 beträgt.

Die Zusammensetzungen können z. B. in einfacher Weise auf Oberflächen aufgebracht werden. Sie verringern nahezu vollständig die Benetzbarkeit der Oberfläche und erzeugen auf diesen Oberflächen einen Selbstreinigungseffekt. Außerdem wurde gefunden, dass sich die erfindungsgemäßen Zusammensetzungen zu Formkörpern verarbeiten lassen, die eine schwer benetzbare Oberfläche aufweisen. Demnach betrifft die vorliegende Erfindung auch ein Verfahren zur Erzeugung von schwer benetzbaren Oberflächen, bei dem man eine erfindungsgemäße Zusammensetzung auf eine zu beschichtende Oberfläche aufbringt sowie die Verwendung der Zusammensetzungen zur Erzeugung von Oberflächen mit Selbstreinigungseffekten.

Für die Charakterisierung von Oberflächen bezüglich ihrer Benetzbarkeit kann der statische Kontaktwinkel eines Flüssigkeitstropfens auf einer Oberfläche herangezogen werden. Der statische Kontaktwinkel ist definiert als der Winkel, der von der besagten Oberfläche und einer Tangente entlang der Oberfläche des Flüssigkeitstropfens im Bereich der Kontaktstelle des Flüssigkeitstropfens mit der Oberfläche eingeschlossen wird, wobei der Kontaktwinkel durch den Flüssigkeitstropfen gemessen wird. Ein Kontaktwinkel von 0 bedeutet demnach vollständige Benetzbarkeit und keine Tropfenbildung, während ein Kontaktwinkel von 180° vollständige Nichtbenetzbarkeit bedeutet. Die Bestimmung des Kontaktwinkels kann nach bekannten Methoden, beispielsweise mit Hilfe eines mit einem Goniometer ausgerüsteten Mikroskops bestimmt werden (siehe auch C. D. Bain et al., Angew. Chem. 101 (1989) 522-528 sowie A. Born et al., Farbe & Lack 105 (1999) S. 96-104).

Die mit den erfindungsgemäßen Zusammensetzungen behandelten Oberflächen weisen in der Regel für verschiedenste Flüssigkeiten, insbesondere für Wasser, statische Kontaktwinkel ≥ 120° und insbesondere ≥ 140° auf (bestimmt bei Raumtemperatur). Der Kontaktwinkel für Wasser und wässrige Lösungen beträgt in der Regel mindestens 140°. Häufig werden sogar Kontaktwinkel > 160°, insbesondere bei Wasser, erreicht. Kontaktwinkel oberhalb 160° können in der Regel nicht mit ausreichender Genauigkeit bestimmt werden. Ein Kontaktwinkel oberhalb 160° entspricht jedoch in der Regel mit einer vollkommenen Unbenetzbarkeit der Oberfläche.

Ein weiteres Mass für die Benetzbarkeit einer Oberfläche ist die "Repellent Power" $F_R$, die als Kehrwert der Gewichtskraft $F_H$ definiert ist, welche erforderlich ist, um einen Flüssigkeitstropfen von einer geneigten Oberfläche ablaufen zu lassen. Die "Repellent Power" wird hierzu anhand der folgenden Formel berechnet:

$$F_R = \frac{1}{F_H} = \frac{1}{\sin \alpha \cdot m \cdot g}$$

Hierin steht m für die Masse des Flüssigkeitstropfens, g für die Gravitationsbeschleunigung und a für den kleinstmöglichen Neigungswinkel der zu prüfenden Oberfläche gegen die Horizontale, der ausreicht, den Flüssigkeitstropfen von dieser Oberfläche ablaufen zu lassen.

Unter einem filmbildenden Bindemittel versteht man hier und im folgenden Polymere und niedermolekulare Substanzen, die auf einer Oberfläche einen festen Film bilden. Die Bindemittel dienen z. B. zur Fixierung der Pulverteilchen auf der Oberfläche des zu beschichtenden Substrats oder zur Fixierung der Pulverflächen untereinander, wenn man die Zusammensetzungen als Pulver einsetzt oder aus ihnen einen Formkörper herstellt.

Zur Charakterisierung der Hydrophobie des Bindemittels dient seine Oberflächenspannung. Sie kann beispielsweise durch Messung des statischen Kontaktwinkels von Wasser an einer glatten, mit dem Bindemittel beschichteten Oberfläche bestimmt werden kann. Hydrophobe Bindemittel zeichnen sich durch statische Kontaktwinkel für Wasser von wenigstens 90° aus. Sie kann auch nach der Methode des "hängenden Tropfens" (Pendant Drop: siehe S. Wu, "polymer Interface and Adhesion", Marcel Decker Inc., New York 1982, S. 266-268) bestimmt werden. Die angegebenen Werte für die Oberflächenspannung der Bindemittel beziehen sich hier und im Folgenden auf die nach der "Methode des hängenden Tropfens" bestimmten Werte. Hydrophobe Bindemittel im Sinne der Erfindung weisen eine Oberflächenspannung < 50 mN/m auf. Die Oberflächenspannung handelsüblicher Bindemittelpolymere sind teilweise in der Literatur angegeben; siehe z. B. Wu et al. loc.cit. S. 88 ff. sowie S. Ellefson et al. J. Am. Ceram. Soc. 21, 193, (1938); S. Wu, J. Colloid Interface Sci. 31, 153, (1969), J. Phys. Chem. 74, 632 (1970), J. Polym. Sci, C34, 19, (1971); R.J. Roe et al., J. Phys. Chem. 72, 2013 (1968), J. Phys. Chem. 71, 4190 (1967), J. Colloid Interface Sci. 31, 228, (1969); J.F. Padday in "Surface and Colloid Science (Herausgeber E. Matijevic), Wiley, New York 1969, S. 101-149.

Erfindungsgemäß bevorzugt sind solche Bindemittel, die eine Oberflächenenergie < 42 mN/m und insbesondere < 37 mN/m aufweisen. In der Regel reicht es aus, wenn das Bindemittel eine Oberflächenenergie ≥ 10 mN/m und insbesondere ≥ 20 mN/m aufweist.

In der Regel handelt es sich bei den Bindemitteln um thermoplastische Polymere, die in organischen Lösungsmitteln löslich sind. Als Bindemittel kann man auch organische Prepolymere einsetzen, die durch einen thermischen, oxidativen oder photochemisehen Härtungsvorgang vernetzt werden und so eine feste Beschichtung mit dem Pulver bilden.

Die Art des Bindemittels richtet sich häufig nach dem gewünschten Anwendungszweck und ist für den erfindungsgemässen Erfolg eher von untergeordneter Bedeutung sofern das Bindemittel hinreichend hydrophob ist.

Eine Klasee hydrophober Bindemittel sind Homo- und Copolymere von hydrophoben, ethylenisch ungesättigten Monomeren, die in Wasser eine Löslichkeit < 1 g/l (bei 25°C) aufweisen. Derartige Monomere machen in der Regel wenigstens 50 Gew.-% des als Bindemittel eingesetzten Polymers aus.

Beispiele für bevorzugte hydrophobe Monomere sind Ethylen, Propylen, Isobuten, n-Hexen, n-Octen, Isoocten, n-Decen, Isotridecen, Vinylester von linearen oder verzweigten Alkancarbonsäuren mit 5 bis 36 Kohlenstoffatonen, z. B. vinylhexanoat, Vinyloctanoat, Vinyllaurat und Vinylstearat, weiterhin Ester der Acrylsäure und der Methacrylsäure mit linearen oder verzweigten $C_4$-$C_{36}$-Alkanolen, z. B.n-Butyl(meth)acrylat, tert.-Butyl(meth)acrylat, n-Hexyl(meth)acrylat, 2-Ethylhexyl(meth)acrylat, 2-Propylheptyl(meth)acrylat, Lauryl(meth)acrylat und stearyl(meth)acrylat, weiterhin Vinyl- und Allylether von $C_4$-$C_{36}$-Alkanolen, wie n-Butylvinylether und Octadecylvinylether,

Typische Bindemittelpolymere dieses Typs sind Polyäthylen, Polypropylen, Polyisobuten, Poly-n-butylmethacrylat, Polyisobutylmethacrylat, Poly-tert.-butylmethacrylat, Polyhexylmethacrylat, Poly(2-ethylhexylmethacrylat), Poly-n-butylacrylat, Polyisobutylacrylat, Poly-tert.-butylacrylat, Poly(2-ethylhexylacrylat) sowie Copolymere der Maleinsäure mit wenigstens einem hydrophoben Monomer ausgewählt unter $C_3$-$C_{36}$-Olefinen, $C_4$-$C_{36}$-Alkylvinylethern, den Vinylestern aliphatischer $C_5$-$C_{36}$-Carbonsäuren,

Geeignete Bindemittel sind auch polypropylenoxid und Polybutylenoxid, Polytetrahydrofuren.

Das gewiehtamittlere Molekulargewicht der Bindemittelpolymere kann über einen weiten Bereich variieren und liegt in der Regel im Bereich von 1000 bis 10 Mio. g/Mol und vorzugsweise im Bereich von 2500 bis 6 Mio., insbesondere bis 5 Mio. g/Mol (viskosimetrisch bestimmt). Sofern das Bindemittelpolymer ein Polyolefin und insbesondere Polyisobuten ist, liegt sein gewichtsmittleres Molekulargewicht vorzugsweise im Bereich von 30000 bis 6 Mio. g/Mol, oder im Bereich von 500000 bis 5 Mio. g/Mol. Im Falle des Polyoctadecylvinylethers liegt das Molekulargewicht vorzugsweise im Bereich von 2000 bis 10000 g/Mol und insbesondere im Bereich von 2500 bis 5000 g/Mol.

Typische photochemisch und/oder thermisch vernetzbare Bindemittel sind Polymere bzw. oligomere mit ethylenisch ungesättigten Doppelbindungen, wie man sie zur Herstellung strahlungshärtbarer Lacke verwendet. Hierzu zählen beispielsweise fließfähige Zubereitungen von Polyetheracrylaten, Polyesteracrylaten, Polyurethanacrylaten, Polyestern mit einkondensierten Maleinsäureanhydrid-Einheiten, Epoxidharze z. B. aromatische Epoxidharze, wobei die Oligomere bzw. Polymere zur Verbesserung ihrer Pließfähigkeit gegebenenfalls in organischen Lösungsmitteln und/oder Reaktivverdünnern gelöst sind. Unter Reaktivverdünnern versteht man niedermolekulare, ethylenisch ungesättigte Flüssigkeiten, die mit den ethylenisch ungesättigten Polymeren beim Vernetzen die Beschichtung ausbilden. Strahlungshärtbare Bindemittel und diese Bindemittel enthaltenden Zubereitungen sind dem Fachmann hinreichend bekannt, z. B. aus P.K.T. Oldring (Hrsg.) "Chemistry and Technology of UV & EB Formulation for Coatings, Inks & Paints", Vol. 2, 1991, Sita Technology London, und kommerziell erhältlich, beispielsweise unter den Handelsmarken Laromer®P084F, Laromer®LR8819, Laromer®PE55F, Laramer®LR8861, BASF Aktiengesellschaft, Ludwigshafen.

Erfindungsgemäß besonders bevorzugte Bindemittel sind insbesondere Polyisobuten, ataktisches, isotaktisches und syndiotaktisches Polypropylen, Polyethylen sowie Homo- und Copolymere von ethylenisch ungesättigten Monomeren mit $C_4$-$C_{36}$-Alkylgruppen und insbesondere mit $C_8$-$C_{22}$Alkylgruppen und gegebenenfalls damit copolymerisierbaren, ethylenisch ungesättigten comonomeren, sowie $C_3$-$C_4$-Polyalkylenoxide. Bierunter besonders bevorzugt sind Homo- und Copolymere von $C_8$-$C_{36}$-Alkylvinylethern, z.B. Polyoctadecylvinylether.

Die in den erfindungsgemäßen Zusammensetzungen enthaltenen Pulver sind im Wesentlichen durch ihre hydrophobe Oberfläche und ihre poröse Struktur, die in einer hohen spezifischen Oberfläche ihren Ausdruck findet, charakterisiert. Als spezifische Oberfläche gilt die nach DIN 66131 bestimmte BET-Oberfläche. Die in den erfindungsgemäßen Beschichtungsmitteln enthaltenen Pulverteilchen weisen vorzugsweise eine BET-Oberfläche im Bereich von wenigstens 5, insbesondere wenigstens 10 und besonderes bevorzugt wenigstens 20 m²/g auf. Insbesondere liegt sie im Bereich von 5 bis 1000 m²/g, besonders bevorzugt im Bereich von 10 bis 800 m²/g und ganz besonders bevorzugt im Bereich von 20 bis 500 m²/g auf.

Als Pulverteilchen kommen sowohl anorganische Materialien in Betracht, die eine hydrophobe Oberfläche aus physikalisch absorbierten oder chemisorbierten organischen Molekülen mit Alkylgruppen aufweisen, als auch hydrophobe, organische Polymerpulver mit hoher spezifischer Oberfläche in Betracht.

In einer bevorzugten Ausführungsform umfassen die Pulverteilchen einen oxidischen Träger und eine auf der Oberfläche des Trägers befindliche, hydrophobe Schicht. Selbstverständlich hat der oxidische Träger eine poröse Struktur. Die hydrophobe Schicht wird aus organischen, unpolaren Molekülen bzw. Molekülgruppen gebildet, die auf der Oberfläche des Trägers physikalisch adsorbiert oder chemisorbiert sind.

Als oxidische Träger kommen beispielsweise Aluminiumoxid, Titandioxid sowie Siliziumdioxid in Betracht. Vorzugsweise handelt es sich bei dem oxidischen Träger um pyrogenes Siliziumdioxid (pyrogenes Siliziumdioxid: siehe Ullmann's Encyclopedia of Industrial Chemistry, Band A23, S. 635 ff), die vorzugsweise eine spezifische Oberfläche im Bereich von 50 bis 400 m²/g aufweist.

Die in den erfindungsgemäßen Zusammensetzungen enthaltenen Pulver mit einem oxidischen Trägermaterial weisen an ihrer Oberfläche in der Regel eine Vielzahl von Alkylgruppen oder (Per)fluoralkylgruppen auf. Diese Gruppen bilden die hydrophobe Schicht. Vorzugsweise liegen die Alkylgruppen bzw. (Per)fluoralkylgruppen in Form von (Perfluor)alkylsilangruppen oder (Perfluor)alkylsiloxangruppen z. B. in Form von (Poly)dimethylsiloxangruppen vor, die mit dem oxidischen Trägermaterial verknüpft sind, beispielsweise durch physikalische Wechselwirkung oder durch kovalente Bindungen. Derartige Pulverteilchen erhält man in der Regel dadurch, dass man das oxidische Trägermaterial mit einer (Perfluor)alkylgruppen-haltigen Verbindung behandelt, die wenigstens eine reaktive funktionelle Gruppe aufweist, welche mit den Oberflächen-nahen OH-Gruppen des oxidischen Trägerteilchens eine chemische Reaktion eingeht. Beispiele für derartige Verbindungen sind Hexamethyldisilazan, Octyltrimethoxysilan, Silikonöl, Chlortrimethylsilan oder Dichlordimethylsilan.

Poröse Pulverteilchen, umfassend oxidische Trägerteilchen und eine auf ihrer Oberfläche befindliche hydrophobe Schicht sind bekannt oder können nach den für die Herstellung von hydrophobiertem pyrogenen Siliziumdioxid bekannten Methoden hergestellt werden. Hydrophobiertes pyrogenes Siliziumdioxid ist beispielsweise unter der Bezeichnung Aerosil® R 812S (Pa. Degussa-Hüls, Deutschland) im Handel erhältlich.

Beispiele für feinteilige organische Pulver mit hydrophober Oberfläche sind feinteilige Polymerpulver, z. B. Polytetrafluorethylenpulver oder $C_2$-$C_4$-Polyolefinpulver, beispielsweise die nach dem in der EP-A 761 696 beschriebenen Verfahren erhältlichen Polypropylen- und Polyethylenpulver. Die feinteiligen organischen Pulverteilchen weisen in der Regel Durchmesser im Bereich von 0,05 μm bis 100 μm, vorzugsweise im Bereich von 0,05 μm bis 50 μm auf. Die gewichtsmittlere Teilchengröße der feinteiligen Polymerpulver (gewichtsmittlerer Teilchendruchmesser der Pulverteilchen) liegt in der Regel oberhalb 0,2 μm und unterhalb 100 μm und insbesondere im Bereich von 0,5 bis 50 μm.

Zur Erreichung des erfindungsgemäß gewünschten Effekts einer geringen Benetzbarkeit hat es sich als günstig erwiesen, wenn in den erfindungsgemäßen Zusammensetzungen das Gewichtsverhältnis von Pulver i) zu Bindemittel ii) wenigstens 1:1,5 beträgt. Vorzugsweise wird dieses Gewichtsverhältnis einen Wert von 100:1, insbesondere 50:1 nicht überschreiten. Ganz besonders bevorzugt liegt das Gewichtsverhältnis von i) zu ii) im Bereich von 1:1 bis 5:1.

Eine bevorzugte Ausführungsform der Erfindung betrifft Zusammensetzungen in Form von Beschichtungsmitteln.

Die erfindungsgemäen Beschichtungsmittteln können in trockener Form, d. h. als Pulverzubereitung, welches sowohl das feinteilige Pulver i) als auch das polymere Bindemittel ii) umfasst, eingesetzt werden.

In einer bevorzugten Ausführungsform setzt man jedoch das Beschichtungsmittel in einer bei der Verarbeitungstemperatur fließfähigen Form ein. Die Verarbeitung der Beschichtungsmittel kann selbstverständlich sowohl bei Raumtemperatur als auch bei Temperaturen unterhalb oder oberhalb Raumtemperatur erfolgen zum Beispiel bei Temperaturen im Bereich von 0°C bis 150°C. je nach Art der Zubereitung.

In der fließfähigen Form enthalten die erfindungsgemäßen Beschichtungsmittel in der Regel neben dem Pulver i) und dem Bindemittel ii) gegebenenfalls ein organisches Verdünnungs- oder Lösungsmittel, wobei solche Lösungsmittel bevorzugt sind, welche das polymere Bindemittel lösen oder quellen, nicht jedoch das feinteilige Pulver i). Hierdurch wird eine bessere Ausbildung der Beschichtung erreicht.

Geeignete Lösungsmittel sind flüchtige organische Lösungsmittel, die nach dem Aufbringen der Beschichtung, gegebenenfalls durch Erwärmen, verdunsten und so die Ausbildung eines gleichmäßigen Films des Bindemittelpolymeren erlauben. Beispiele für geeignete Lösungsmittel sind Ketone, wie Aceton, Ethylmethylketon, flüchtige Ester der Essigsäure, wie Ethylacetat, n-Butylacetat, cyclische Ether, wie Tetrahydrofuran sowie aliphatische und aromatische Kohlenwasserstoffe, wie Terpentinöl, Petroleum, Benzin, Toluol und Xylol. Bevorzugte organische Lösungsmittel sind die vorgenannten aliphatischen und aromatischen Kohlenwasserstoffe.

In den Flüssigformulierungen liegt der Feststoffgehalt (Gesamtmenge aus Pulver i) und polymerem Bindemittel ii), bezogen auf das Gesamtgewicht der Formulierung) im Bereich von 0,5 bis 80 Gew.-%. Bei konventionellen Anstrichmitteln liegt der Feststoffgehalt häufig im Bereich von 10 bis 50 Gew.-%. Bei sprühfähigen Lacken kann er auch darunter liegen, z.B. im Bereich von 0,5 bis 10 Gew.-%.

Die erfindungsgemäßen Beschichtungsmittel können auch als Ärosole formuliert werden. Sie enthalten dann neben dem Pulver i) und dem Bindemittel ii) wenigstens ein Treibmittel sowie gegebenenfalls auch eines der bei den Flüssigformulierungen genanntes Lösungsmittel. Als Treibmittel kommen die hierfür üblichen Substanzen wie Propan, Butan, Dimethylether, $CO_2$, $N_2O$ und deren Gemische in Betracht. Der Feststoffgehalt von Sprays liegt in der Regel in den hierfür üblichen Bereichen, beispielsweise im Bereich von 0,1 bis 10 Gew.-%, wobei die Feststoffe neben den Komponenten i) und ii) auch feste Additive umfassen können. Die restlichen Anteile der als Ärosole formulierten Beschichtungsmittel entfallen auf Treibgase und gegebenenfalls Lösungsmittel.

Die erfindungsgemäßen Beschichtungsmittel werden zur Herstellung der schwer benetzbaren Oberfläche in bekannter Weise auf die zu beschichtenden Substrate aufgebracht.

Grundsätzlich kann man mit den erfindungsgemäßen Beschichtungsmitteln alle konventionellen Oberflächen beschichten. Beispiele für konventionelle Oberflächen sind die Oberflächen von Holz, Metall, Glas, Kunststoff. Selbstverständlich kann man mit den erfindungsgemäßen Beschichtungsmitteln auch rauhe bzw. poröse Oberflächen, wie Beton, Gips, Papier, Gewebe, beispielsweise textile Gewebe für Bekleidung, Schirme, Zelte, Markisen und für vergleichbare Anwendungen, weiterhin Leder und auch Haare beschichten.

Das Aufbringen der Beschichtung auf die zu beschichtende Oberfläche (im Folgenden auch als Substrat bezeichnet) erfolgt in Abhängigkeit von der Ausgestaltung des Beschichtungsmittels und der Art des Substrates nach den in der Lacktechnologie üblichen Auftragsverfahren. Bei lösungsmittelhaltigen, fließfähigen Beschichtungsmitteln erfolgt der Auftrag in der Regel durch Streichen, Sprühen, z. B. mittels Airbrush, Tauchen oder Walzen und anschließendes Trocknen der Beschichtung, wobei das Lösungsmittel verdunstet.

Wenn man als Bindemittel ii) ein thermisch, oxidativ oder photochemisch vernetzbares Prepolymer einsetzt, dann sind die Beschichtungsmittel häufig auch ohne Zusatz von Lösungsmitteln fließfähig und können, gegebenenfalls nach Verdünnen mit einem Reaktivverdünner, nach dem oben genannten Verfahren aufgebracht werden. Die Ausbildung der eigentlichen Beschichtung erfolgt dann durch thermische, oxidative oder photochemische Härtung (Vernetzung) der Präpolymere.

Bei pulverförmigen Beschichtungsmitteln arbeitet man nach den üblichen Verfahren der Pulverbeschichtung. Bei diesen Verfahren wird das pulverförmige Beschichtungsmittel in der gewünschten Menge auf das zu beschichtende Substrat aufgebracht und anschließend erwärmt, wobei das thermoplastische, polymere Bindemittel zerfließt und einen polymeren Film bildet, der die erfindungsgemäßen Pulverteilchen auf der Oberfläche fixiert. Auch kann man das pulverförmige Beschichtungsmittel auf eine mit einem Haftkleber versehene Oberfläche aufbringen. Hierbei kommt es ebenfalls zur Fixierung der pulverförmigen Zusammensetzung auf der zu beschichtenden Oberfläche und auf diese Weise zur Ausbildung einer schwerbenetzbaren Oberfläche.

Zur Erreichung des gewünschten Effekts wird man das Beschichtungsmittel vorzugsweise in einer Menge von wenigstens 0,01 g/m², insbesondere wenigstens 0,1 g/m² und speziell wenigstens 0,5 g/m² und vorzugsweise nicht mehr als 1000 g/m², bezogen auf die festen Bestandteile im Beschichtungsmittel, auf die zu beschichtende Oberfläche aufbringen. Feste Bestandteile sind hierbei im Wesentlichen die Komponenten i) und ii). Dies entspricht einem nach dem Verdunsten von flüchtigen Bestandteilen verbleibenden Flächengewicht der Beschichtung von wenigsten 0,01 g/m², insbesondere wenigstens 0,1 g/m² und speziell wenigstens 0,5 g/m². Häufig werden die Beschichtungen in Mengen bis 100 g/m² auf die zu beschichtende Oberfläche aufgebracht (bezogen auf feste Bestandteile), jedoch wird man bei anderen Anwendungsformen auch größere Mengen an Beschichtungsmittel aufbringen, beispielsweise bei Beschichtungen in Form von Fassadenfarben oder bei der Beschichtung von Betondachsteinen.

Eine weitere Ausführungsform betrifft die Verwendung der erfindungsgemäßen Zusammensetzungen zur Herstellung von Formkörpern mit schwer benetzbaren Oberflächen.

Die Herstellung der Formkörper aus den erfindungsgemäßen Zusammensetzungen kann in an sich bekannter Weise nach üblichen Verfahren zur Herstellung von Formkörpern aus thermoplastischen oder duroplastischen Kunststoffen erfolgen. Eine Übersicht findet man in A. Franck, Kunstatoffkompendium, 4. Auflage S. 147-205, Vogel Buchverlag, Würzburg 1996: Johannaber, Kunststoffmasehinenführer, 3. Ausgabe, Hauser München, Wien 1992. In der Regel wird man hierzu vorzugsweise eine bei Verarbeitungstemperatur fließfähige oder schmelzfähige Zusammensetzung, die kalten Fluss zeigt, einem üblichen Formgebungsverfahren, z. B. bei Verwendung thermoplastischer Bindemittel, einem Warmform-, Extrusions- bzw. Spritzguss- oder einem Blasformverfahren,unterwerfen. Bei Verwendung härtbarer Bindemittel kommen die zur Herstellung von Formkörpern aus Duroplasten bzw. Reaktionsharzen in Betracht, z. B. Reaktionsspritzgas, Extrusion, Pressen, in Betracht. Die Zusammensetzungen können auch in Form von Pulvern, insbesondere bei Verwendung thermoplastischer Bindemittel, verarbeitet werden, z. B. durch Pressen und Sintern.

Zur Herstellung von erfindungsgemäßen Formkörpern hat es sich im Hinblick auf die Festigkeit der Formkörper als vorteilhaft erwiesen, wenn das Gewichtsverhältnis von Pulver i) zu Bindemittel ii) einen Wert von 10:1, vorzugsweise 5:1, insbesondere 4:1 und besonders bevorzugt 3:1 nicht überschreitet. Für die erfindungsgemäßen Oberflächeneigenschaften ist es von Vorteil, wenn das Gewichtsverhältnis Pulver i) zu Bindemittel ii), wenigstens 1:1,5 beträgt.

Die erfindungsgemäßen Formkörper weisen wenigstens eine Oberfläche auf, die aus den erfindungsgemäßen Zusammensetzungen aufgebaut ist, d. h. der Pormkörper kann vollständig aus den erfindungsgemäßen Zusammensetzungen aufgebaut sein oder nur Oberflächenteilbereiche aufweisen, die aus den erfindungsgemäßen Zusammensetzungen aufgebaut sind, wohingegen der übrige Formkörper aus anderen Bereichen aufgebaut ist. Beispiele hierfür sind Formkörper, die mit den erfindungsgemäßen Zusammensetzungen ummantelt sind wie ummantelte Rohre oder ummantelte Kabel.

Die mit den erfindungsgemäßen Zusammensetzungen beschichteten Substrate zeichnen sich durch sehr geringe Adhäsionskräfte gegenüber Flüssigkeiten und Feststoffen aus. Flüssigkeiten, insbesondere hydrophile Flüssigkeiten, wie Wasser, wässrige Lösungen, Dispersionen und Suspensionen, polare organische Flüssigkeiten, insbesondere solche, die wasserlöslich sind, z. B. $C_1$-$C_4$-Alkanole, Glykole, Glycerin und deren Mischungen, aber auch Schmelzen polarer organischer Verbindungen, z. B. von Kohlehydraten und vergleichbaren Verbindungen, perlen von diesen Beschichtungen rückstandsfrei ab.

Zudem zeichnen sich die mit den erfindungsgemäßen Beschichtungsmitteln beschichteten Oberflächen durch einen Selbstreinigungseffekt aus. Feststoffe, insbesondere partikuläre Feststoffe, können von der Oberfläche durch Abspülen mit Flüssigkeiten wie Wasser ohne Reinigungsmittel entfernt werden. Überraschenderweise lassen sich die partikulären Feststoffe auch durch Druckluft sehr leicht entfernen.

Die gleichen vorteilhaften Eigenschaften wie die erfindungsgemäß beschichteten Oberflächen weisen auch die aus den erfindungsgemäßen Zusammensetzungen hergestellten Formkörper auf. Überdies verlieren die Formkörper überraschenderweise auch bei Zerstörung ihrer Oberfläche, z. B. durch Aufrauhen oder Zerkratzen, diese Eigenschaften nicht. Diese Eigenschaft erlaubt es, die vorteilhaften Oberflächeneigenschaften bei Alterung der Oberflächen zu regenerieren.

Weiterhin ist der Strömungswiderstand von Flüssigkeiten, insbesondere Wasser und wässrige Lösungen, beim Durchfluss durch Rohre, Kapillare oder Düsen, die mit den erfindungsgemäßen Beschichtungen beschichtet sind, reduziert.

Aufgrund ihrer Eigenschaften können die erfindungsgemäßen Zusammensetzungen in vielfältiger Weise eingesetzt werden.

Korrosionsanfällige Materialien, wie Beton, Stahlbeton, Holz oder Metall, können durch Beschichtung mit den erfindungsgemäßen Beschichtungsmitteln wirksam gegen Korrosion geschützt werden.

Die erfindungsgemäßen Zusammensetzungen sind weiterhin geeignet für die Oberflächenveredelung von Papier, Karton oder Kunststofffolien.

Elektrische Geräte, die der Witterung ausgesetzt sind und unter Witterungsbedingungen anschmutzen, wie hochspannungsführende Freileitungen, Spannungsumformungsvorrichtungen, Isolatoren, Parabolantennen, etc., und die in verschmutztem oder feuchtem Zustand Leistungseinbußen erleiden, kann man mit den erfindungsgemäßen Zusammensetzungen behandeln. Hierdurch wird das Anschmutzen verringert und eine Leistungseinbuße zu vermieden.

Die erfindungsgemäßen Zusammensetzungen eignen sich weiterhin zum Schutz vor Verschmutzung insbesondere von Oberflächen, die der Witterung ausgesetzt sind, beispielsweise von Dächern, Fassaden, Fenstern, Garten- und Balkonmöbeln, Kraftfahrzeugen, Verkehrsschildern, Reklametafeln, Solaranlagen, etc. Ebenfalls denkbar ist ein Einsatz der erfindungsgemäßen Beschichtungsmittel im Sanitärbereich, beispielsweise als Beschichtung für Armaturen, Nasszellen, Badewannen, Schwimmbäder, Wand- und Fußbodenfliesen, etc. Der Einsatz der Beschichtungsmittel verhindert hier nicht nur die Ablagerungen von Verschmutzungen aus dem Wasser, sondern auch den Befall und das Wachstum unerwünschter Lebewesen, wie Mikroorganismen, Algen, Flechten und Moose.

Weiterhin kann man die erfindungsgemäßen Zusammensetzungen zur Beschichtung von Anlagenteilen einsetzen, die mit Flüssigkeiten in Kontakt kommen. Hier sind insbesondere Rohre, Kessel, Tanks, Reaktoren, Wärmetauscher, Verdampfer, Kondensatoren, Pumpen, Düsen, Zerstäuber, Sprühtrockner, Kristallisatoren, Abfüllanlagen, etc. zu nennen. Die Ausrüstung dieser Anlagenteile mit den erfindungsgemäßen Zusammensetzungen verhindert das Abscheiden von festen Bestandteilen oder Zersetzungsprodukten aus den Flüssigkeiten. Hierdurch wird die Bildung von Belägen, Ablagerungen, Verstopfungen, Verschmutzungen auf den Oberflächen der Anlageteile, die mit den Flüssigkeiten in Kontakt kommen, vermindert. Außerdem verringern die erfindungsgemäßen Oberflächen in den Anlagenteilen, z. B. in Rohren, den Strömungswiderstand von Flüssigkeiten. Sie verringern so den Energieaufwand, der zum Transport insbesondere hochviskoser Flüssigkeiten durch die Anlagenteile erforderlich ist.

Durch Ausrüstung der kühlenden Oberflächen von Kühlaggregaten mit den erfindungsgemäßen Zusammensetzungen kann die häufig auftretende Vereisung verringert werden. Die Verwendung der erfindungsgemäßen Beschichtungsmittel für die Beschichtung von Schiffsrümpfen reduziert den Gleitwiderstand durch das Wasser und verringert so den Treibstoffbedarf. Bei Flugzeugen kann man durch Beschichtung der Außenflächen mit den erfindungsgemäßen Beschichtungsmitteln die Gefahr des Vereisens verringern.

Verpackungen für flüssige Füllgüter, die mit den erfindungsgemäßen Zusammensetzungen ausgerüstet sind, können nahezu rückstandsfrei entleert werden und ermöglichen somit zum einen eine bessere Nutzung des Füllgutes und erleichtern das Recycling der Verpackungsmaterialien, da sie nicht durch Rückstände des Füllgutes verunreinigt sind.

Vorratsbehälter, deren Innenflächen mit den erfindungsgemäßen Zusammensetzungen ausgerüstet sind, lassen sich leichter entleeren und können aufgrund des Selbstreinigungseffektes in einfacher Weise durch Ausspülen mit Wasser ohne den Einsatz von Tensiden gereinigt werden.

Gewebe, insbesondere textile Gewebe, die mit den erfindungsgemäßen Zusammensetzungen ausgerüstet sind, zeichnen sich sich durch eine hohe Wasserundurchlässigkeit und eine geringe Wasseraufnahme aus und sind schmutzabweisend. Durch Behandlung mit den erfindungsgemäßen Mitteln wird das Gewebe regelrecht wasserabweisend. Schmutzpartikel können leicht mit Wasser abgespült werden, ohne dass es zu einer nennenswerten Wasseraufnahme kommt. Die erfindungsgemäßen Zusammensetzungen eignen sich demnach als Wasser- und Schmutz-abweisende Ausrüstung für Gewebe, das beispielsweise zur Herstellung von Bekleidung, Zelten, Markisen, Planen, Schirmen, zur Auskleidung von Räumen z. B. Kfz-Innenräumen, zur Bespannung von Sitzflächen, beispielsweise im Automotive-Bereich, eingesetzt werden kann.

Leder, das mit den erfindungsgemäßen Zusammensetzungen behandelt wurde eignet sich zur Herstellung von Lederbekleidung und Schuhen mit wasser- und schmutzabweisenden Eigenschaften.

Im Bereich der Kosmetik kann man die erfindungsgemäßen Zusammensetzungen als Haarbehandlungsmittel, z. B. in Form von Haarsprays, einsetzen, sofern sie ein kosmetisch verträgliches Bindemittel i), z. B. die hierfür üblicherweise eingesetzten Polymere enthalten.

Bauteile bzw. Formkörper können in analoger Weise eingesetzt werden.

Die vorliegenden Beispiele sollen die Erfindung verdeutlichen, ohne sie jedoch einzuschränken.

I. Analytik

I.1 Allgemeine Vorschrift zur Bestimmung der Repellent Power

Der zu untersuchende beschichtete Gegenstand wird auf einem Messtisch montiert, dessen Neigung von 1° bis 90° eingestellt werden kann. Dann lässt man mit Hilfe einer Kanüle Flüssigkeitstropfen auf die Probe fallen, wobei der Abstand der Kanüle von der Probenoberfläche 10 mm beträgt. Die Tropfen haben eine definierte Masse, die durch vorheriges Wiegen bestimmt wird. Durch schrittweises Absenken des Neigungswinkels a wird der minimale Neigungswinkel bestimmt, bei dem die Tropfen gerade noch abperlen. Aus dem minimalen Neigungswinkel a, der Tropfenmasse m und der Erdbeschleunigung g wird nach der oben genannten Forme die Repellent Power $F_R$ berechnet. Die Repellent Power wird in (Millinewton)$^{-1}$ angegeben und ist ein quantitatives Maß für die Fähigkeit einer Oberfläche Flüssigkeitstropfen rückstandsfrei abperlen zu lassen.

I.2 Bestimmung des Kontaktwinkels:

Die Bestimmung des Kontaktwinkels erfolgte mit einem Gerät Typ G1 der Fa. Krüss GmbH. Hierzu wurde mit Hilfe einer Edelstahlkanüle mit einem Innendurchmesser von 0.5 mm ein Tropfen destilliertes Wasser auf die zu untersuchende Oberfläche gebracht. Dann wurde mit Hilfe eines Goniometers der Kontaktwinkel zwischen Wassertropfen und Oberfläche optisch bestimmt.Bei sehr hydrophoben Oberflächen, wie sie Gegenstand der vorliegenden Erfindung sind, haftet der Wassertropfen an der Oberfläche praktisch nicht mehr. Beim Austritt aus der Edelstahlkanüle haftet der Wassertropfen dann so lange an der Kanüle, bis er aufgrund seines Gewichts abtropft. Bei solchen Oberflächen kann der Kontaktwinkel nicht mehr exakt bestimmt, aber auf > 160° abgeschätzt werden.

II Herstellungsbeispiele:

Beispiel 1: Beschichtungsmittel B1

10,73 g Polyoctadecylvinylether mit einem Molekulargewicht von ca. 3000 g/Mol (viskosimetrisch bestimmt) wurden in 96,6 g Petroleumbenzin (Siedebereich 60 bis 80°C) gelöst. In dieser Lösung dispergierte man unter intensivem Rühren 10,73 g einer handelsüblichen, hydrophobierten pyrogenen Kieselsäure mit einer BET-Oberfläche von 220 m$^2$/g (bestimmt nach DIN 66131; Aerosil® R812S).

Der in den Beispielen eingesetzte Polyoctadecylvinylether hat eine Oberflächenspannung von 27,7 mN/m, bestimmt an einer Schmelze nach der Methode des hängenden Tropfens.

Beispiel 2: Beschichtungsmittel B2

2,73 g Polyisobuten mit einem gewichtsmittleren Molekulargewicht von 4,7 Mio. g/Mol (viskosimetrisch bestimmt) wurden in 113 g Tetrahydrofuran gelöst. In dieser Lösung dispergierte man 6,37 g einer handelsüblichen, hydrophobierten pyrogenen Kieselsäure mit einer BET-Oberfläche von 220 m$^2$/g (Aerosil® R812S).

Polyisobuten hat eine Oberflächenspannung von 33,6 mN/m (vgl. S. Wu, loc cit, S. 88 ff).

Beispiel 3: Herstellung einer mit dem Beschichtungsmittel B1 beschichteten Folie F1

Das Beschichtungsmittel B1 wurde mit einem Rakel bei einem Rakelspalt von 100 $\mu$ auf eine Polyethylenterephthalat-Folie aufgetragen. Man erhielt die Beschichtung durch Verdunsten des Petroleumbenzins.

Die Repellent Power der Folie F1, bestimmt für eine 10 gew.-%ige wässrige Ethanollösung, betrug 358 mN$^{-1}$. Die Tropfenmasse betrug hierbei 5,44 mg.

Beispiel 4: Herstellung einer mit B1 beschichteten Glasflasche

Eine handelsübliche Glasflasche aus Weißglas wurde mit dem Beschichtungsmittel B1 vollständig gefüllt. Man beließ das Beschichtungsmittel etwa eine Minute in der Glasflasche und goss es dann wieder aus. Nach Verdampfen des Petroleumbenzins erhielt man eine auf ihrer Innenseite beschichtete Glasflasche.

Beispiel 5: Herstellung einer mit B2 beschichteten Kunststofffolie F2

Das Beschichtungsmittel B2 wurde auf die in Beispiel 3 beschriebenen Weise auf eine Polyethylenterephthalat-Folie aufgebracht und das Lösungsmittel verdampft.

Die Repellent Power der Folie F2, bestimmt für eine 10 gew.-%ige wässrige Ethanollösung, betrug 154 mN$^{-1}$. Die Tropfenmasse betrug hierbei 5,44 mg.

Beispiel 6: Beschichtungsmittel B3

5 g Polyoctadecylvinylether mit einem Molekulargewicht von 3000 g/Mol (s.o.) wurden in 90 g Petroleumbenzin (Siedebereich 60 bis 80°C) gelöst. In dieser Lösung dispergierte man 5 g einer handelsüblichen, hydrophobierten pyrogenen Kieselsäure mit einer BET-Oberfläche von 220 m$^2$/g (Aerosil® R812S).

Beispiel 7: Beschichtungsmittel B4:

1.5 g Polyisobuten mit einem Molekulargewicht von 4.700.000 g/mol (viskosimetrisch bestimmt) wurden in 50 g Benzin (Siedebereich 60-80°c) gelöst. In dieser Lösung wurden 13.5 g Polytetrafluorethylen Pulver mit einer Korngröße von 1 $\mu$m und einer spezifischen BET-Oberfläche von 8,01 m$^2$/g (Hersteller Aldrich) unter intensivem Rühren dispergiert.

Beispiel 8: Herstellung einer mit Beschichtungsmittel B4 beschichteten Glasplatte F3

Das Beschichtungsmittel B5 wurde mit einem Rakel mit einem Rakelspalt von 100 $\mu$m auf eine Glasplatte aufgetragen. Nach dem Verdunsten des Petroleumbenzins erhält man eine Schicht, die von Wasser nicht mehr benetzt wird.

Der statische Kontaktwinkel der beschichteten Glasplatte F3 gegenüber Wasser ist > 160°.

Die Repellent Power der Glasplatte F3, bestimmt für eine 10 gew.-%ige wässrige Ethanollösung, betrug 36 mN$^{-1}$. Die Tropfenmasse betrug hierbei 5,44 mg.

Beispiel 9: Beschichtungsmittel B4 (Sprühlack):

2,73 g Polyisobuten mit einem Molekulargewicht von 4.700.000 g/mol (viskosimetrisch bestimmt) wurden in 900,9 g Benzin (Siedebereich 60-80°C) gelöst. In dieser Lösung dispergierte man 6,37 g einer handelsüblichen, hydrophobierten pyrogenen Kieselsäure mit einer BET-Oberfläche von 220 m$^2$/g (Aerosil® R812S).

Beispiel 10: Herstellung einer mit Beschichtungsmittel B5 beschichteten Holzplatte F4

Das Beschichtungsmittel B5 wurde mit einem Air-Brusch (Typ HY-MAX HP 10) auf eine Holzplatte aufgebracht. Nach dem Trocknen erhält man eine Schicht, die von Wasser nicht mehr benetzt wird.

Die Repellent Power der Holzplatte F4, bestimmt für eine 10 gew.-%ige wässrige Ethanollösung, betrug 537 mN$^{-1}$. Die Tropfenmasse betrug hierbei 5,44 mg.

Beispiel 11: Beschichtungsmittel B6 (Ärosol):

2,73 g Polyisobuten mit einem Molekulargewicht von 4.700.000 g/mol (viskosimetrisch bestimmt) wurden in 900,9 g Benzin (Siedebereich 60-80°C) gelöst. In dieser Lösung dispergierte man 6,37 g einer handelsüblichen, hydrophobierten pyrogenen Kieselsäure mit einer BET-Oberfläche von 220 m$^2$/g (Aerosil® R812S). 50 g dieser Dispersion wurden in eine Spraydose gefüllt. Dann presste man 21,4 g Treibgas auf.

Beispiel 12: Herstellung einer mit Beschichtungsmittel B6 beschichteten Glasplatte F5

Das Beschichtungsmittel B6 wurde auf eine Glasplatte aufgesprüht und 3 Minuten getrocknet.

Die Repellent Power der Glasplatte F5, bestimmt für eine 10 gew.-%ige wässrige Ethanollösung, betrug 77 mN$^{-1}$. Die Tropfenmasse betrug hierbei 5,44 mg.

Beispiel 13: Beschichtungsmittel B7:

1,5 g Polyisobuten mit einem Molekulargewicht von 4.700.000 g/mol (viskosimetrisch bestimmt) wurden in 78,8 g Benzin (Siedebereich 60-80°C) gelöst. In dieser Lösung dispergierte man 13,5 g Polypropylenpulver mit einer Partikelgröße < 36 $\mu$m und einer BET-Oberfläche von 5,3 m$^2$/g (hergestellt nach EP-A 761696).

Beispiel 14: Herstellung einer mit Beschichtungsmittel B7 beschichteten Glasplatte F6

Das Beschichtungsmittel B7 wurde mit einem Rakel mit einem Rakelspalt von 150 $\mu$m auf eine Glasplatte aufgetragen. Nach dem Verdunsten des Petroleumbenzins erhält man eine Schicht, die von Wasser nicht mehr benetzt wird. Der statische Kontaktwinkel gegenüber Wasser betragt mehr als 160°.

Die Repellent Power der Glasplatte F6, bestimmt für eine 10 gew.-%ige wässrige Ethanollösung, betrug 90 mN$^{-1}$. Die Tropfenmasse betrug hierbei 5,44 mg.

Beispiel 15: Beschichtungsmittel B8:

1,5 g Polyisobuten mit einem Molekulargewicht von 4.700.000 g/mol (viskosimetrisch bestimmt) wurden in 48,6 g Benzin (Siedebereich 60-80°C) gelöst. In dieser Lösung dispergierte man 6 g Polypropylenpulver mit einer Partikelgröße < 36 $\mu$m und einer BET-Oberfläche von 5,3 m$^2$/g (hergestellt nach EP-A 761696).

Beispiel 16: Herstellung einer mit Beschichtungsmittel B8 beschichteten Glasplatte F7

Das Beschichtungsmittel B8 wurde mit einem Rakel mit einem Rakelspalt von 150 $\mu$m auf eine Glasplatte aufgetragen. Nach dem Verdunsten des Petroleumbenzins erhält man eine Schicht, die von Wasser nicht mehr benetzt wird. Der statische Kontaktwinkel gegenüber Wasser betragt mehr als 160°.

Die Repellent Power der Glasplatte F7, bestimmt für eine 10 gew.-%ige wässrige Ethanollösung, betrug 50 mN$^{-1}$. Die Tropfenmasse betrug hierbei 5,44 mg.

Beispiel 17: Herstellung einer pulverförmigen Zusammensetzung

Beschichtungsmittel B1 wurde im Vakuum am Rotationsverdampfer bis zur Trockne eingedampft und bei 50°C im Vakuum getrocknet. Der Feststoff wurde in einer Analysenmühle der Fa. IKA (Typ IKA A10) zu einem Pulver vermahlen.

Beispiel 18:

Analog Beispiel 17 wurde Beschichtungsmittel B2 in eine pulverförmige Zusammensetzung überführt.

Beispiel 19:

Eine Klebefolie wurde in dem Pulver aus Beispiel 17 10 sec. bewegt. Anschließend wurde die so erhaltene Folie mit Pressluft abgeblasen. Auf der Klebstofffolie haftete eine dünne Pulverschicht. Die Probe wurde vom Wasser nicht benetzt. Der statische Kontaktwinkel für Wasser war > 160°.

Beispiel 20:

Analog Beispiel 19 wurde eine Klebstofffolie mit der pulverförmigen Zusammensetzung aus Beispiel 18 beschichtet. Die so erhaltene beschichtete Oberfläche wurde vom Wasser nicht benetzt. Der statische Kontaktwinkel für Wasser war > 160°.

Beispiel 21: Herstellung des Formkörpers

Das Pulver aus Beispiel 17 wurde in eine Formpresse bei einem Druck von 7,4·10$^7$ Pa zu einer Platte mit einer Dicke von 2mm verpresst. Die Platte wurde vom Wasser nicht benetzt. Der statische Kontaktwinkel für Wasser war > 160°.

Beispiel 22: Herstellung eines Formkörpers

Analog Beispiel 21 wurde aus dem Pulver aus Beispiel 18 eine dünne Platte mit einer Dicke von 2mm hergestellt. Der statische Kontaktwinkel für Wasser war > 160°.

III Anwendungstechnische Untersuchungen

Test der Benetzbarkeit:

Die in den Beispielen 3 und 5 beschriebenen, beschichteten Folien F1 und F2, die Folien der Beispiele 19 und 20, die Glasplatte F3 aus Beispiel 8, die Holzplatte F4 aus Beispiel 10 und die Platten der Beispiele 21 und 22 wurden auf einer Messtischanordnung zur Bestimmung der Reppellent Power angebracht. Bei einem Neigungswinkel von 10° wurden nacheinander als Tropfen jeweils die folgenden wässrigen Flüssigkeiten in definierter Menge aufgebracht:

- Wasser (30 mg),
- Kaffee (30 mg),
- Honig (59 mg),
- wässrige Salzsäure (32 gew.-%ig, 41 mg),
- wässrige Natronlauge (5 gew.-%ig, 45 mg),
- 30 gew.-%ige Lösung von Polyacrylsäure in Wasser (47 mg),
- 30 gew.-%ige Lösung eines Copolymeren aus Vinylpyrrolidon und Vinylimidazol in Wasser (35 mg),
- wässrige Polymerdispersion Acronal® 290D (BASF Aktiengesellschaft, 58 mg),
- wässrige Polymerdispersion Styronal® D808 (BASF Aktiengesellschaft 46 mg).

Alle Tropfen liefen bei einem Neigungswinkel von 10° gegen die Horizontale rückstandsfrei von der Folie F1, F2, der Glasplatte F3 und der Holzplatte F4 ab.

In einem Vergleichsexperiment wurden die oben aufgeführten Flüssigkeiten auf eine nicht behandelte PET-Folie getropft. Der Neigungswinkel der Probe betrug ebenfalls 10° gegen die Horizontale. In allen Fällen kam es zu einer Benetzung der Oberfläche; mit Ausnahme von Wasser hinterliessen alle Flüssigkeiten Rückstände auf der Folie.

In der zuvor beschriebenen Weise wurden auch die beschichteten Glasplatten F5, F6 und F7 untersucht. Hierzu wurden die folgenden Flüssigkeiten untersucht:

- Wasser (30 mg),
- Kaffee (30 mg),
- Honig (59 mg),
- wässrige Salzsäure (32 gew.-%ig, 41 mg),
- wässrige Natronlauge (5 gew.-%ig, 45 mg),
- 30 gew.-%ige Lösung von Polyacrylsäure in Wasser (47 mg),
- 30 gew.-%ige Lösung eines Copolymeren aus Vinylpyrrolidon und Vinylimidazol in Wasser (35 mg).

Mit Ausnahme der wässrigen Polyacrylsäure und Honig liefen alle Tropfen rückstandsfrei ab. Honig und die Polyacrylsäurelösung hinterliessen geringe Flüssigkeitsmengen auf der Oberfläche.

Test der Schmutzentfernung:

Die Folien F1 und F2, die Folien der Beispiele 18 und 19, die Glasplatten F3 und F6, die Platten der Beispiele 20 und 21 und die beschichtete Holzplatte F4 wurden mit Rußpulver (Printex® V, BASF Drucksysteme GmBH) beschmutzt. Anschließend tropfte man Wasser auf die Beschichtung. Dabei wurde das Rußpulver durch die abperlenden Wassertropfen im Falle von F1, F2 und F3 vollständig, im Falle von F4 und F6 nahezu vollständig entfernt, so dass die ursprüngliche Oberfläche wieder erhalten wurde. Ein Einsatz von Reinigungsmitteln war nicht erforderlich.

In einem Vergleichsexperiment wurde eine unbehandelte PET-Folie mit Rußpulver (Printex® V, BASF Drucksysteme GmbH) beschmutzt. Anschließend tropfte man Wasser auf die Folien. Dabei wurde das Rußpulver durch die abperlenden Wassertropfen nur teilweise entfernt, so dass Rußflecken auf der Folie zurückblieben.

Außerdem wurde weißes Papier mit dem Aerosol B6 aus Beispiel 11 besprüht und anschließend etwa 3 min getrocknet. Das besprühte Papier wurde mit Rußpulver (Printex V von BASF Drucksysteme GmbH) beschmutzt und anschließend mit Wasser abgewaschen. Dabei wurde das Rußpulver durch die abperlenden Wassertropfen entfernt, so dass die ursprüngliche saubere Papieroberfläche wieder erhalten wurde. Nach dem Abperlen der Wassertropfen war das Papier nicht aufgeweicht, sondern völlig trocken.

In einem Vergleichsexperiment wurde ein nicht besprühtes weißes Papier mit Rußpulver beschmutzt und anschließend mit Wasser abgewaschen. Das ablaufende Wasser entfernte den Ruß nur zu einem geringen Teil, so dass Rußflecken auf dem Papier zurückblieben. Nach dem Ablaufen des Wassers war das Papier nass und aufgeweicht.

Test der Belagsverhinderung:

Die beschichtete Folie F2 wurde auf 110°C erwärmt. Auf die heiße Folie tropfte man geschmolzenes Sorbitol (110°C). Der Sorbitoltropfen benetzte die Folie nicht. Ein geringer Neigungswinkel der Folie von etwa 5° führte zu einem vollständigen, rückstandsfreien Ablaufen der geschmolzenen Sorbitoltropfen.

In einer weiteren Untersuchung tropfte man weiteres geschmolzenes Sorbitol auf die erwärmte Folie und ließ dann auf 20°C abkühlen. Hierbei erstarrten die Sorbitoltropfen zu klebrigen harzartigen Tropfen, die durch leichtes Berühren mit einem Spatel vollständig von der Folie entfernt werden konnten. Dabei wurden keine Sorbitolrückstände auf der Folie beobachtet.

In analoger Weise wurde die Folie aus Beispiel 20 und die Platte aus Beispiel 22 untersucht. Es wurden die gleichen Resultate wie bei Folie F2 gefunden.

Zu Vergleichszwecken tropfte man eine Sorbitolschmelze (110°C) auf eine unbeschichtete, 110°C heiße Polyethylenterephthalat-Folie. Die Sorbitolschmelze benetzte die Folienoberfläche und auch bei einem Neigungswinkel von 90° lief die Schmelze nicht rückstandsfrei von der Folie ab. Erkaltetes Sorbitol (20°C) verklebte mit der Folie und ließ sich von ihr mechanisch nicht rückstandsfrei entfernen.

Mechanische Stabilität:

Die Platten der Beispiele 20 und 21 wurden mit Schmirgelpapier (Körnung 320) abgeschmirgelt, bis sie 10 % ihres Gewichts verloren hatten. Die so erhaltenen Platten wiesen einen statischen Kontaktwinkel für Wasser > 160° auf und wurden auch von den unter III genannten Flüssigkeiten (Wasser, Kaffee, Honig, wässrige HCl, wässrige NaOH, wässrige Polyacrylsäure, wässriges Polyvinylpyrrolidon/Vinylimidazol-Copolymer, Acronal® 290 D und Styronal® D808 nicht benetzt.

Verringerung des Strömungswiderstands:

Ein handelsübliches Kapillarviskosimeter (Fa. Schott, Typ 50140/IV) mit einem Kapillardurchmesser von 3,6 mm wurde mit dem Beschichtungsmittels B3 vollständig gefüllt. Nach 5 Minuten wurde das Beschichtungsmittel B3 wieder ausgegossen. Anschließend leitete man zur Entfernung des Lösungsmittels etwa 15 Minuten getrocknete Luft durch die Kapillare. Anschließend bestimmte man bei 20°C die Auslaufzeit von Glycerin. Sie betrug 55 Sekunden. Die Auslaufzeit einer Mischung aus 95 g Glycerin und 5 g Wasser betrug 24 Sekunden.

Zu Vergleichszwecken wurden in einem baugleichen Viskosimeter, das unbeschichtet war, die Auslaufzeiten der oben genannten Lösungen bestimmt. Bei Glycerin betrug sie 74 Sekunden. Bei der Mischung aus 95 g Glycerin und 5 g Wasser betrug sie 31 Sekunden. Dies entspricht einer Verringerung der Auslaufzeit von 26 % im Falle des Glycerins bzw. 23 % im Falle der Mischung aus Glycerin und Wasser. Die Beispiele zeigen deutlich, dass der Strömungswiderstand fließender Flüssigkeiten in Rohrleitungen durch die erfindungsgemäßen Beschichtungen verringert wird.

**Patentansprüche**

1. Zusammensetzung zur Herstellung schwer benetzbarer Oberflächen, enthaltend

    i) wenigstens ein feinteiliges Pulver, dessen Pulverteilchen eine hydrophobe Oberfläche und eine poröse Struktur aufweisen, die durch eine BET-Oberfläche (bestimmt nach DIN 66131) von wenigstens 1 m$^2$/g charakterisiert ist, und
    ii) wenigstens ein filmbildendes Bindemittel, das durch eine Oberflächenspannung < 50 mN/m charakterisiert ist, und das ausgewählt ist unter Polyethylen, Polypropylen, Polyisobuten, Homo- und Copolymeren ethylenisch ungesättigter Monomere mit $C_4$-$C_{36}$-Alkylgruppen, und $C_3$-$C_4$-Polyalkylenoxiden,

    wobei das Gewichtsverhältnis von Pulver zu Bindemittel wenigstens 1:1,5 beträgt.

2. Zusammensetzung nach Anspruch 1, worin die Pulverteilchen einen oxidischen Träger und eine auf der Oberfläche des Trägers befindliche, hydrophobe Schicht aufweisen.

3. Zusammensetzung nach Anspruch 2, wobei der oxidische Träger pyrogene Kieselsäure ist.

4. Zusammensetzung nach Anspruch 2 oder 3, wobei die auf dem hydrophoben Träger angeordnete hydrophobe Oberflächenschicht von (Perfluor)Alkylsilangruppen und/oder (Perfluor)Alkylsiloxangruppen gebildet wird, die mit dem oxidischen Träger verknüpft sind.

5. Zusammensetzung nach Anspruch 1, worin das feinteilige Pulver ein polymerpulver mit einer gewichtseaittleren Teilchengröße im Bereich von 0,2 bis 100 μm ist.

6. Zusammensetzung nach Anspruch 5, worin das Polymerpulver ausgewählt ist unter Polytetrafluorethylenpulvern und $C_2$-$C_4$-Polyolefinpulvern.

7. Zusammensetzung nach einem der vorhergehenden Ansprüche in Form eines Beschichtungsmittels.

8. Zusammensetzung nach Anspruch 7 in Form einer fließfähigen Zubereitung, enthaltend zusätzlich wenigstens ein organisches Verdünnungs- oder Lösungsmittel.

9. Zusammensetzung nach Anspruch 7 in Form eines Aerosols, umfassend zusätzlich wenigstens ein Treibmittel.

10. Verfahren zur Herstellung einer schwerbenetzbaren oberflä-che, **dadurch gekennzeichnet, dass** man eine zusammensetzung, wie in einem der Ansprüche 1 bis 9 definiert, auf eine konventionelle Oberfläche aufbringt

11. Verfahren nach Anspruch 10, **dadurch gekennzeichnet, dass** man dieZusammensetzung in einer Menge von 0,01 bis 1000 g/m$^2$, bezogen auf die festen Bestandteile im Beschichtungsmittel, auf die zu beschichtende Oberfäche aufbringt.

12. Verwendung von zusammensetzungen, wie in einem der Ansprüche 1 bis 9 definiert, zur Herstellung von schwer benetzbaren Oberflächen.

13. Verwendung von zusammensetzungen, wie in einem der Ansprüche 1 bis 9 definiert, zur Herstellung von Oberflächen mit Selbstreinigungseffekt.

14. Verwendung von Zusammensetzungen wie in einem der Ansprüche 1 bis 9 definiert, zur Verringerung des Strömungswiderstandes in Rohren, Kapillaren und Düsen.

15. Verwendung von Zusammensetzungen wie in einem der Ansprüche 1 bis 6 definiert, zur Herstellung von Formköpern.

16. Formkörper deren Oberflächenbereiche im Wesentlichen aus einer Zusammensetzung wie in einem der Ansprüche 1 bis 6 definiert, aufgebaut sind.

**Claims**

1. A composition for producing difficult-to-wet surfaces, comprising

    i) at least one finely divided powder whose particles have a hydrophobic surface and a porous structure **characterized by** a BET surface area (determined in accordance with DIN 66131) of at least 1 m$^2$/g, and
    ii) at least one film-forming binder **characterized by** a surface tension < 50 mN/m, and selected from polyethylene, polypropylene, polyisobutene, homopolymers and copolymers of ethylenically unsaturated monomers having $C_4$-$C_{36}$ alkyl groups, and $C_3$-$C_4$ polyalkylene oxides, the weight ratio of powder to binder being at least 1:1.5.

2. The composition according to claim 1, wherein the powder particles comprise an oxide support and a hydrophobic coat on the surface of the support.

3. The composition according to claim 2, wherein the oxide support is pyrogenic silica.

4. The composition according to claim 2 or 3, wherein the hydrophobic surface coat on the hydrophobic support is formed by (perfluoro)alkyl silane groups and/or (perfluoro)alkyl siloxane groups which are linked to the oxide support.

5. The composition according to claim 1, wherein the finely divided powder is a polymer powder having a weight-average particle size in the range from 0.2 to 100 $\mu$m.

6. The composition according to claim 5, wherein the polymer powder is selected from polytetrafluoroethylene powders and $C_2$-$C_4$ polyolefin powders.

7. The composition according to any of the preceding claims in the form of a coating composition.

8. The composition according to claim 7 in the form of a flowable formulation further comprising at least one organic diluent or solvent.

9. The composition according to claim 7 in the form of an aerosol further comprising at least one propellant.

10. A process for producing a difficult-to-wet surface, which comprises applying a composition as defined in any of claims 1 to 9 to a conventional surface.

11. The process according to claim 10, wherein the composition is applied in an amount of from 0.01 to 1000 $g/m^2$ based on the solid constituents of the coating composition, to the surface that is to be coated.

12. The use of a composition as defined in any of claims 1 to 9 to produce difficult-to-wet surfaces.

13. The use of a composition as defined in any of claims 1 to 9 to produce surfaces having a self-cleaning effect.

14. The use of a composition as defined in any of claims 1 to 9 to reduce the flow resistance in pipes, capillaries, and nozzles.

15. The use of a composition as defined in any of claims 1 to 6 to produce shaped articles.

16. A shaped article whose surface regions are composed essentially of a composition as defined in any of claims 1 to 6.

**Revendications**

1. Composition pour préparer des surfaces difficilement mouillables, comprenant .

    i) au moins une poudre finement divisée dont les particules pulvérulentes présentent une surface hydrophobe et une structure poreuse, qui est **caractérisée par** une surface BET (déterminée selon la norme DIN 66131) d'au moins 1 $m^2$/g et

    ii) au moins un liant filmogène qui est **caractérisé par** une tension de surface < 50 mN/m et qui est choisi parmi le polyéthylène, le polypropylène, le polyisobutène, des homopolymères et des copolymères de monomères à insaturation éthylénique avec des groupements alkyle en $C_4$-$C_{36}$ et des oxydes de polyalkylène en $C_3$-$C_4$, le rapport pondéral de la poudre au liant étant d'au moins 1:1,5.

2. Composition selon la revendication 1, dans laquelle les particules pulvérulentes présentent un support d'oxyde et une couche hydrophobe située à la surface du support.

3. Composition selon la revendication 2, dans laquelle le support d'oxyde est de l'acide silicique pyrogène.

4. Composition selon la revendication 2 ou 3, dans laquelle la couche de surface hydrophobe, aménagée sur le support hydrophobe, est formée de groupements (perfluoro)alkylsilane et/ou de groupements (perfluoro)alkylsiloxane qui sont fixés au support d'oxyde.

5. Composition selon la revendication 1, dans laquelle la poudre finement divisée est une poudre polymère ayant une taille particulaire moyenne en poids dans la plage de 0,2 à 100 $\mu$m.

6. Composition selon la revendication 5, dans laquelle on choisit la poudre polymère parmi des poudres de polytétrafluoréthylène et des poudres de polyoléfine en $C_2$-$C_4$.

7. Composition selon l'une quelconque des revendications précédentes, se présentant sous la forme d'un agent d'enduction.

**8.** Composition selon la revendication 7, se présentant sous la forme d'une préparation fluide comprenant, en outre, au moins un diluant ou un solvant organique.

**9.** Composition selon la revendication 7, se présentant sous la forme d'un aérosol comprenant, en outre, au moins un agent moussant.

**10.** Procédé de fabrication d'une surface difficilement mouillable, **caractérisé en ce que** l'on applique une composition, telle que définie dans l'une quelconque des revendications 1 à 9, sur une surface conventionnelle.

**11.** Procédé selon la revendication 10, **caractérisé en ce que** l'on applique la composition sur la surface à enduire, en quantité de 0,01 à 1000 g/m$^2$ par rapport aux composants solides présents dans l'agent d'enduction.

**12.** Utilisation de compositions telles que définies dans l'une quelconque des revendications 1 à 9, pour la fabrication de surfaces difficilement mouillables.

**13.** Utilisation de compositions telles que définies dans l'une quelconque des revendications 1 à 9, pour la fabrication de surfaces ayant un effet autonettoyant.

**14.** Utilisation de compositions telles que définies dans l'une quelconque des revendications 1 à 9, pour réduire la résistance à l'écoulement dans des tubes, des capillaires et des tuyères.

**15.** Utilisation de compositions telles que définies dans l'une quelconque des revendications 1 à 6, pour la fabrication de corps moulés.

**16.** Corps moulés dont les zones superficielles sont formées sensiblement à partir d'une composition telle que définie dans l'une quelconque des revendications 1 à 6.